# EUROPEAN PATENT SPECIFICATION

(11) **EP 1 767 581 B1**
(45) Date of publication and mention of the grant of the patent: **18.01.2012**
(21) Application number: 06121238.7
(22) Date of filing: 26.09.2006
(51) Int. Cl.: C08L 95/00, E01C 19/10

(54) **improved preparation of an asphalt mix, and use thereof**
Verfahren zur Herstellung einer Asphaltmischung und ihre Verwendung
Procédé pour la production d'une composition d'asphalte et son utilisation

(30) Priority: 26.09.2005 NL 1030039
(43) Date of publication of application: 28.03.2007
(73) Proprietor: Koninklijke BAM Groep N.V., 3981 AZ Bunnik (NL)
(72) Inventor: van den Beemt, Cornelis Marinus Antonius, 4817 BB, Breda (NL)
(74) Representative: Hart, Walter

(56) References cited:
- EP-A- 0 116 816
- EP-B1- 1 263 885
- K.J. JENKINS ET AL.: ""Half-warm foamed bitumen treatment, a new process"" 1999, , XP008073457 7th Conference on asphalt pavements for Southern Africa

## Description

### INTRODUCTION TO THE DESCRIPTION

The present invention relates to a method for preparing an asphalt mix and to the use of the asphalt mix obtained in this way for surface coverage and for road construction and road renovation and surface coursing in particular.

Asphalt compositions generally comprise stone, grit, gravel, sand, filler and binders, generally bitumen. In this context, stone, grit, gravel and sand are generally referred to as aggregate material. Given the absence of quarries, in the Netherlands this aggregate material is mainly reused from old road surfaces. The bitumen functions as a binding agent and is generally present in an amount of 4 - 8% by weight of the asphalt composition. The constituents are then mixed to form a cohesive mass, the asphalt mix. The viscosity of the bitumen plays a major role in this context, since it to a significant degree determines the distribution of bitumen and aggregates in the asphalt mix and therefore the quality of the final asphalt.

As a result, in the specialist field a distinction is drawn between the cold and warm mixing of bitumen and aggregates, leading respectively to "cold asphalt mix" and "warm asphalt mix", also known as "cold mix" and "hot mix" respectively. On account of their low preparation and use temperature, cold asphalt mixes are inexpensive and easy to handle, but are restricted to low-viscosity bitumen, typically with a penetration of 180 - 700 dmm. Cold asphalt mixes are generally distinguished by a reduced stability and cohesion and a long setting time, and are therefore suitable in particular for roads which are not subject to particularly high levels of traffic.

For roads with higher levels of traffic, a stabler, tougher and more wear-resistant asphalt is desirable. This entails the use of warm asphalt mix, which is generally prepared at 150 - 190°C. The actual asphalting typically takes place at approximately 160°C, and generally even at higher temperatures. Therefore, this process can also employ high-viscosity bitumen. However, these high temperatures also constitute a drawback, since they are associated with stricter safety regulations and in particular higher energy costs.

Since the 1960s, widespread use has been made of foamed bitumen, as originally developed by Csanyi in US 2,917,395 and optimized by Mobil Oil Corp. (cf. for example GB 1 325 916), to improve the quality of asphalt mix. Heating bitumen to approx. 130 - 180°C and injecting 2 - 7% of cold water into it causes the bitumen to expand and require a lower viscosity.

The miscibility of aggregates and bitumen is further promoted by the formation of a film of water between the aggregates and the bitumen adhering thereto. According to K.J. Jenkins et al, *"Half-warm foamed bitumen treatment, a new process",* 7th Conference on asphalt pavements for Southern Africa (1999), in particular § 3.1 thereof, for this purpose the moisture content during the mixing of bitumen and aggregates has to be kept at a high level. This generally means mixing with a residual moisture percentage of at least 1 - 1.5% by weight, provided by the water-containing aggregate material. Sometimes, water is added to this in asphalt processing in order to further promote mixing, and in the event of relatively high mixing temperatures, water even has to be added during the process. Asphalt compositions with lower quantities of mixing moisture are said to provide an asphalt mix which has insufficient binding and a high risk of what is known as balling and contraction.

Moreover, the presence of water in the mixture of aggregates and bitumen, according to the above-referenced publication by K.J. Jenkins et al., is required to enable the overall composition to be compacted in a subsequent step, for example by rolling, during which the water would be, as it were, kneaded out between bitumen and aggregates. According to the prior art, without additional mixing moisture it is impossible to make asphalt mix.

To save energy and associated costs, it is proposed in EP-B 1 263 885 to produce a warm asphalt mix at a lower temperature by splitting the mixing into two phases, in which aggregate material is first of all covered with a fine bitumen component at 60 - 130°C and is then mixed with hard foamed-up bitumen, typically at a temperature of 20 - 70°C. In this context, it should be noted that the foamed-up bitumen should not be confused with the abovementioned foamed bitumen. In the case of foamed-up bitumen, a bubbly low-viscosity bitumen is produced by blowing in water bubbles. The asphalt mixture obtained in this way remains much denser and more resistant to fatigue (typical penetration of 60 - 250 dmm) than a cold asphalt mix, has fewer cracks and good spreading properties at 60 - 100°C. The drawback is that the use of different types of bitumen and different conditions make the method complicated.

Moreover, in EP-B 1 263 885, for mixing purposes the aggregate material is heated to approximately 130°C, in order to prevent an excessive temperature difference on initial contact between aggregates and bitumen, but there are no further details as to the duration and intensity of this preparatory step. At any rate, a person skilled in the art, on reading this patent publication, is not given any suggestion that the moisture quantities which are customary in the specialist field should be altered in the mixing process.

In the prior art, there is an ongoing demand to simplify the preparation and processing of asphalt mixes and to reduce the energy costs associated with this preparation, without losing quality, in particular the resistance to fatigue and permanent deformation.

### DESCRIPTION OF THE INVENTION

It is an object of the invention to provide a method for preparing and processing asphalt mix, in which high preparation and processing temperatures are no longer required and the drawbacks of safety risks and energy costs associated with a high temperature are reduced.

The invention relates to a method for preparing an asphalt mix, comprising contacting and mixing, at a temperature in the range from 75 - 110°C, foamed bitumen and aggregate material, the moisture content of which when it is contacted with the foamed bitumen is less than 0.5% by weight, based on the mass of the aggregate material.

The invention relates in particular to a method for preparing an asphalt mix, comprising contacting and mixing, at a temperature of 75 - 110°C, foamed bitumen and aggregate material, wherein the moisture content of the asphalt mix during the mixing is less than 0.5% by weight, based on the total mass of the asphalt composition. Therefore, in addition to the use of dry aggregate material, no mixing moisture is added. The moisture content of the asphalt mix can be determined using the established method NEN-EN 1428, in order in this way to retrospectively establish that the moisture content is sufficiently low even during mixing.

It has been found that the mixing of foamed bitumen and aggregate material can be improved by using a mixing moisture content much lower than 1 - 1.5%. As a result, it is possible to prepare an asphalt mix which, in terms of resistance to fatigue and stability, is no different from traditional warm asphalt mixes or hot mix, at a temperature which is much lower than is customary in the prior art. On the other hand, the preparation differs very considerably from the conventional warm asphalt preparation, by virtue of an energy saving of approximately 25 - 40%, a reduced CO₂ emission and a reduction in other harmful emissions.

The concept of the invention of preparing asphalt mix by keeping the mixing moisture content at a low level during mixing contradicts prevailing opinions in the specialist field that a low moisture content would reduce the miscibility and processibility of the final asphalt mix and asphalt: after all, according to the prior art, during further processing, for example by rolling, the moisture would be responsible for the final compacting. Moreover, compacting without added mixing moisture was in the literature referred to as impossible, based on results achieved with existing, less well mixed asphalt mix (mixed at a high moisture content).

In the context of the present invention, the term aggregate material, without any restriction, is to be understood as encompassing all forms of mineral which are customarily used for asphalt in the prior art. The most common examples are stone chippings, gravel, grit and sand, which differ from one another primarily in terms of size. These are generally hydrophilic materials, which readily take up water. These aggregates may be materials which have been recovered from old asphalt, and in some countries, where the sources of such minerals are scarce, these recovered aggregate materials may even be preferred.

The moisture content of the aggregate material which is contacted with the foamed bitumen is less than 0.5% by weight, preferably less than 0.3% by weight, more preferably less than 0.2% by weight, even more preferably 0.1 % by weight or less, in particular at most 0.07% by weight, calculated on the basis of the aggregate material. To achieve such a low moisture content, the aggregate material is heated. This heating step is not in principle restricted to a specific time span or a specific temperature range, provided that the desired lower moisture content is achieved. For this purpose, it is preferable for the aggregate material to be at a slight underpressure at a temperature of 75 - 100°C. Aggregate material with a moisture content according to the invention is referred to in the remainder of the description as dry aggregate material.

As an alternative, it is also possible to use "chemical" drying, by binding water to an inert material, for example lime.

Foamed bitumen can be used without any restriction in terms of its preparation method. This may be foamed bitumen as provided by the principle described in GB 1 325 916 or a variant thereof. The water which is injected into hot bitumen during the preparation of foamed bitumen in order to effect the desired open structure and reduced viscosity is virtually completely evaporated. In the foamed bitumen formed, the moisture content is therefore less than 0.01 % by weight, preferably even less than 0.001 % by weight, of the mass of the foamed bitumen. The term foamed bitumen is to be understood as encompassing both paraffinic and naphthenic foamed bitumen. The foamed bitumen may also contain the standard additives, such as for example additives for neutralizing anti-foams. The method appears particularly advantageous for the mixing of dry aggregate material with hard foamed bitumen, typically foamed bitumen with a penetration of 20 - 130 dmm, measured in accordance with ASTM D 5 at 25°C.

The dry aggregate material is brought into contact with the foamed bitumen using conventional mixing methods, preferably by paddle mixers. The mixing conditions and mixing techniques are described in detail in the dissertation written by K.J. Jenkins, "Mix design considerations for cold and half-warm bituminous mixes with emphasis on foamed bitumen", Stellenbosch University (South Africa), 2000. The contents thereof are hereby incorporated by reference.

The mixing preferably takes place at a temperature between 80 and 110°C.

It is preferable for the dry aggregate material, at the time of mixing, to be at a temperature which is at least equal to the lower limit of the temperature range at which mixing takes place in accordance with the invention. In addition, it is preferable for the foamed bitumen, at the time of mixing, also to be at a temperature which is at least equal to the lower temperature of the mixing temperature range. For this purpose, the foamed bitumen can advantageously be used immediately after preparation, since this generally takes place at higher temperatures.

The mixing conditions are such that the mixing moisture content during and after the mixing of bitumen and aggregate material to form a substantially homogenous mixture is less than 0.5% by weight, preferably less than 0.3% by weight, more preferably less than 0.2% by weight, even more preferably 0.1 % by weight or less, in particular at most 0.07% by weight, calculated on the basis of the asphalt mixture. In practice, the moisture content can be checked before and after mixing, and values which lie within the range of the invention are sufficient indication that the moisture content will also be within this range during mixing.

Although according to the invention the moisture content is kept as low as possible, the materials do not have to be dried down to extremely low moisture levels. To avoid extreme drying conditions, it is preferable for the moisture content of the aggregate material beforehand and the asphalt mix during and afterwards to be 0.01 % by weight or higher.

Mixing of aggregate material and foamed bitumen takes place in a ratio which does not necessarily deviate from customary values, despite the lower temperatures. The ratio by weight of aggregate material and foamed bitumen is preferably between 10:1 1 and 25:1, with the minimum value approximately corresponding to asphalt mix which is suitable for the production of what is known as SMA, and the maximum value approximately corresponding to asphalt mix suitable for "open" or porous asphalt. In particular, the invention is suitable for mixing aggregates and foamed bitumen in a weight ratio between 15:1 and 25:1. The ratios used during mixing are reflected in the final asphalt mix and in the asphalt prepared therefrom.

It is customary in the specialist field to mix the aggregate material with the foamed bitumen in two steps, with the aggregate material being divided into a fine fraction and a coarse fraction, both fractions having a moisture content of less than 0.5% by weight, and the foamed bitumen first being contacted with the coarse fraction, and then, in a second step, the fine fraction being added to the mixture obtained in this way. The fine fraction typically comprises material with a size of up to approximately 2 mm. Extensive details about this method have been described in the abovementioned references by K.J. Jenkins. Dividing the aggregate material into a two-step foaming operation is intended to prevent bitumen from mixing primarily with the fine sand, with insufficient adhesion to the stone chippings. The mixing conditions in both steps are the same as described in the literature, provided that the temperature in both steps is in the range of the invention, and the moisture content in both fractions satisfies the required moisture criterion. It is within the normal activities of an average person skilled in the art to specify the subdivision in terms of fineness and quantities of each fraction.

In addition to the conventional two-step foaming, it is surprisingly now been found that the dry aggregate materials can be mixed with foamed bitumen in a single mixing step, without the disadvantageous binding of foamed bitumen in particular to the finer materials. This single-step foaming is considered to be a particular aspect of the present invention with a low mixing moisture content. Sufficient binding of foamed bitumen and stone chippings is obtained in a single step, without any restriction of the size distribution of the aggregate material. A single-step foaming operation, in which the aggregate material and the foamed bitumen are mixed in one step, represents the preferred embodiment. In this way, inter alia discontinuously graduated mixtures without recycled product, continuously graduated mixtures with recycled product and continuously graduated mixtures without recycled product are produced.

An "asphalt mix" is prepared by mixing the "asphalt composition", i.e. the combination of constituents, namely foamed bitumen, aggregate material, fillers and additives. The asphalt mix typically contains more than 90% by weight aggregate material and foamed bitumen, in the abovementioned ratios. The remainder is formed by additives, filler materials and residual moisture. The actual contents and ratios are dependent on the particular application. A person skilled in the use of asphalt mix can and will suitably adapt the quantities of aggregates, foamed bitumen and additives. Then, the final asphalt can be obtained from this asphalt mix by compacting and cooling. A second aspect of the invention provides an improved asphalt mix, the term improvement being understood in particular as meaning improved processibility to form asphalt. This asphalt mix is suitable for use for surface coverage and coursing purposes, and for road construction and road renovation in particular.

The asphalt mix according to the invention can - with regard to the preparation - be compared to a "warm mix" preparation. In the specialist field, the term warm mix is to be understood as meaning an asphalt mix which is prepared at temperatures higher than those of cold preparation (cold mix; around 30°C or lower), but are lower than 130 - 160°C, as used for a hot mix. The quality of a mix of this type and asphalt prepared from it is therefore between the two extremes of cold mix and hot mix.

However, asphalt mix prepared using the present method is different from the warm mix from the prior art. Specifically, the asphalt mix according to the invention can advantageously be processed into asphalt at lower temperatures than conventional warm mix, and the final asphalt also has improved properties (in particular resistance to fatigue and deformation) compared to asphalt prepared from conventional warm mix. Asphalt prepared from asphalt mix according to the invention, however, is no different in terms of composition and properties from asphalt produced from conventional hot mix. An asphalt with a penetration of 20 - 130 dmm is typically produced, despite the generally worse mixing properties of hard bitumen that has to be used for this purpose. Therefore, it is preferable for the method to be referred to as an improvement to the hot mix preparation and not as a new warm mix preparation.

To produce asphalt from the mix, after mixing, in a subsequent step, if appropriate after addition of fillers and additives during or after the mixing process, the mix made up of foamed bitumen and aggregate material according to the invention is compacted, for example by rolling. Surprisingly, after cooling and compacting, the result is an asphalt with a degree of compaction which does not differ from conventional asphalt, despite prevailing opinions in the prior art that compacting is the result of the expulsion of air from asphalt mix at a high temperature according to the invention, which therefore could not successfully be processed. During the compacting step, the moisture content no longer needs to be controlled, since any newly added moisture will not be taken up by the mixture of foamed bitumen and dry aggregate material obtained in the mixing process. Moisture of this type is also not included in a determination of moisture in accordance with NEN-EN 1428. The asphalt typically has a degree of compacting of 98 - 101 %, corresponding to asphalt prepared from conventional hot mix.

Although in the prior art the kneading of a hot mix asphalt mix usually begins at a temperature of 160 to 170°C, it has now been found that the compacting of the asphalt mix according to the invention can advantageously be started at much lower temperatures. Despite this lower starting temperature, there is sufficient opportunity to compact the asphalt, since the rolling process can be continued during cooling to a temperature in the range from 50 - 70°C, whereas hitherto in the prior art the process has stopped at about 70°C. Therefore, the compacting range, also known as the kneading or rolling range, preferably covers a temperature in the range from 95 - 110°C down to a temperature in the range from 50 - 70°C. Such a low kneading or compacting process is impossible with conventional asphalt mix, since conventional hot mix is too viscose for further processing at 95 - 100°C. Although, therefore, a comparable asphalt is now obtained, less severe conditions can be used with the asphalt mix according to the invention.

These differences from the existing compacting methods indicate that the asphalt mix prepared according to the invention is different, despite the unchanged constituents and quantities thereof. At a microscopic level, in asphalt mix according to the invention, there appears to be a crater structure close to the binding between aggregate material and foamed bitumen, presumably caused by burst-open bitumen bubbles or "bitumen threads", as they are known, which is absent in conventional hot mix asphalt mix, whereas this structure is very similar to that detected on a laboratory scale in a half-warm asphalt mix (cf. K.J. Jenkins and M.F.C. van de Ven, "Mix design considerations for cold and half-warm bituminous mixes", 7th Conference on asphalt pavements for Southern Africa (1999)). The precise mechanism underlying these less severe processing conditions is not clear, but is not considered to restrict the invention.

Therefore, the invention also relates to an asphalt mix obtainable by the abovementioned method, and to its use for producing asphalt by compacting, with the temperature during the compacting process being between 110 - 50°C.

In addition, the invention also relates to a method for asphalting surfaces, in which the present asphalt mix, after compacting, is applied to the surface that is to be covered using conventional methods, application starting at a temperature in the range from 95 - 110°C. It can be compacted down to a temperature which is in the range from 50 - 70°C. Obviously, this starting temperature may be higher, but in practice the asphalting will advantageously be carried out at a temperature which is as low as possible, in order thereby to save energy and to minimize emissions and safety risks.

The surface to be covered is preferably a road surface, and on account of the good resistance to fatigue and permanent deformation, is even suitable for roads with high levels of traffic. The method can be used to prepare open asphalt or closed asphalt, for continuously and discontinuously graduated mixtures, with and without recycled product, typically with what are known as void contents of 3 - 25%. For the above reasons, however, the new method is not restricted to specific types of asphalt.

The invention is illustrated on the basis of the following example.

### EXAMPLE

An asphalt mix specified as stone chipping asphalt concrete 0/22 mm was produced as follows:
for each batch
500 kg of Scottish granite 8/16 mm;
250 kg of Scottish granite 16/22 mm;
465 kg of Meuse sand 0/2 mm;
28 kg heavy lime-containing filler; and
1250 kg of partial recycled product
were mixed with 63 kg of foamed bitumen in a standard asphalt processing mixer. The foamed bitumen was produced by injecting 2.5% cold water into a 70 - 100 dmm paraffinic penetration bitumen of 170°C. The mineral and the recycled product were heated to 95°C and introduced into the mixer with a water content of approximately 0.1% by weight. The energy saving during the subsequent mixing was 25% compared to standard warm asphalt production. The foamed bitumen was introduced into the mixer at a temperature of approximately 100°C, and the temperature in the mixer was held at 95°C. Immediately after mixing, the moisture content of the asphalt mix was measured, in accordance with NEN-EN 1428. The result was a moisture content of 0.07% by weight.

After mixing in a standard asphalt processing mixer, this mix was processed to form an asphalt, compacting (rolling) took place from 95°C until the asphalt had cooled to 50°C. This compacted asphalt was then sampled, and the samples, after resting for five days, were tested by an independent laboratory, with inter alia the following results:
- the strength of this material was equivalent to that of conventional asphalt (7700 MPa against 7500 MPa);
- water sensitivity of the material complied with the requirements imposed on a covering layer mixture;
- its performance was very good. The material performance was equivalent to or slightly better than that of the conventional STAB;
- permanent deformation of the material was similar to that of a standard STAB. The conclusion of the testing was that the asphalt, based on the tested properties, was comparable to a standard STAB 4.

## Claims

1. Method for preparing an asphalt mix, comprising contacting and mixing, at a temperature in the range from 75 - 110°C, foamed bitumen and aggregate material, the moisture content of which when it is contacted with the foamed bitumen is less than 0.5% by weight, based on the mass of the aggregate material.

2. Method according to claim 1, in which the moisture content of the asphalt mix, during the mixing of foamed bitumen and aggregate material, is less than 0.5% by weight, based on the total mass of the asphalt composition, calculated in accordance with NEN-EN 1428.

3. Method according to claim 1 or 2, in which the asphalt mix, after mixing, is compacted to form an asphalt.

4. Method according to one of claims 1 - 3, in which the aggregate material and the foamed bitumen are mixed in one step.

5. Method according to one of claims 1 - 3, in which the aggregate material is divided into a fine fraction and a coarse fraction, both fractions having a moisture content of less than 0.5% by weight, and in which the foamed bitumen is first contacted with the coarse fraction, and then, in a second step, the fine fraction is added to the mixture obtained in this way.

6. Method according to one of the preceding claims, in which the foamed bitumen has a penetration of 20 - 130 dmm, measured in accordance with ASTM D 5 at 25°C.

7. Asphalt mix obtainable by the method according to claim 2.

8. Use of an asphalt mix according to claim 7 in road construction or road renovation.

9. Method for preparing an asphalt, in which an asphalt mix according to claim 7 is compacted, the temperature during the compacting being between 110 - 50°C.

10. Method according to claim 9, in which the asphalt has a penetration of 20 - 130 dmm, measured in accordance with ASTM D 5 at 25°C.

## Patentansprüche

1. Verfahren zur Herstellung eines Asphaltgemisches, umfassend das Inberührungbringen und Mischen von geschäumten Bitumen und Zuschlagsmaterial bei einer Temperatur im Bereich von 75 bis 110°C, wobei der Feuchtegehalt des Zuschlagsmaterials, wenn es mit dem geschäumten Bitumen in Berührung kommt, geringer ist als 0,5 Gew.-%, basierend auf der Masse des Zuschlagsmaterials.

2. Verfahren nach Anspruch 1, bei dem der Feuchtegehalt des Asphaltgemisches während des Mischens von geschäumtem Bitumen und Zuschlagsmaterial geringer als 0,5 Gew.-% auf der Basis der Gesamtmasse der Asphaltzusammensetzung ist, berechnet in Übereinstimmung mit NEN-EN 1428.

3. Verfahren nach Anspruch 1 oder 2, bei dem das Asphaltgemisch nach dem Mischen verdichtet wird, um einen Asphalt zu bilden.

4. Verfahren nach einem der Ansprüche 1 bis 3, bei dem das Zuschlagsmaterial und das geschäumte Bitumen in einem Schritt gemischt werden.

5. Verfahren nach einem der Ansprüche 1 bis 3, bei dem das Zuschlagsmaterial in einen feinen Anteil und einen groben Anteil unterteilt wird, wobei beide Anteile einen Feuchtegehalt von weniger als 0,5 Gew.-% haben und das geschäumte Bitumen zunächst mit dem groben Anteil in Berührung gebracht wird und anschließend in einem zweiten Schritt der feine Anteil dem Gemisch hinzugefügt wird, das man auf diese Weise erhält.

6. Verfahren nach einem der vorhergehenden Ansprüche, bei dem das geschäumte Bitumen eine Eindringtiefe von 20 bis 130 dmm hat, gemessen nach ASTM D5 bei 25°C.

7. Asphaltgemisch, das man mit dem Verfahren gemäß Anspruch 2 erhalten kann.

8. Verwendung eines Asphaltgemisches nach Anspruch 7 beim Straßenbau oder der Instandsetzung von Straßen.

9. Verfahren zum Herstellen von Asphalt, bei dem das Asphaltgemisch nach Anspruch 7 verdichtet wird, wobei die Temperatur während des Verdichtens zwischen 110°C und 50°C liegt.

10. Verfahren nach Anspruch 9, bei dem der Asphalt eine Eindringtiefe von 20 bis 130 dmm hat, gemessen nach ASTM D5 bei 25°C.

## Revendications

1. Procédé de fabrication d'un mélange asphaltique, comprenant la mise en contact et le mélange, à une température dans la plage de 75 à 110°C, d'une mousse de bitume et d'un granulat, dont la teneur en humidité lorsqu'il est mis en contact avec la mousse de bitume est inférieure à 0,5 % en poids, par rapport à la masse du granulat.

2. Procédé selon la revendication 1, dans lequel la teneur en humidité du mélange asphaltique, au cours du mélange de la mousse de bitume et du granulat, est inférieure à 0,5 % en poids, par rapport à la masse totale de la composition d'asphalte, calculée conformément à la norme NEN-EN 1428.

3. Procédé selon la revendication 1 ou 2, dans lequel le mélange asphaltique, après le mélange, est compacté pour former un asphalte.

4. Procédé selon l'une quelconque des revendications 1 à 3, dans lequel le granulat et la mousse de bitume sont mélangés en une seule étape.

5. Procédé selon l'une quelconque des revendications 1 à 3, dans lequel le granulat se divise en une fraction fine et une fraction grossière, les deux fractions ayant une teneur en humidité inférieure à 0,5 % en poids, et dans lequel la mousse de bitume est tout d'abord mise en contact avec la fraction grossière, puis, dans une seconde étape, la fraction fine est ajoutée au mélange obtenu de cette manière.

6. Procédé selon l'une quelconque des revendications précédentes, dans lequel la mousse de bitume présente une pénétration de 20 à 130 dmm, mesurée conformément à la norme ASTM D 5 à 25°C.

7. Mélange asphaltique pouvant être obtenu par le procédé selon la revendication 2.

8. Utilisation d'un mélange asphaltique selon la revendication 7 dans la construction routière ou la rénovation routière.

9. Procédé de fabrication d'un asphalte, dans lequel un mélange asphaltique selon la revendication 7 est compacté, la température durant la compaction étant comprise entre 110 et 50 °C.

10. Procédé selon la revendication 9, dans lequel l'asphalte a une pénétration de 20 à 130 dmm, mesurée conformément à la norme ASTM D 5 à 25 °C.
